# EUROPEAN PATENT APPLICATION

(11) **EP 4 585 044 A1**
(43) Date of publication of application: **16.07.2025**
(21) Application number: 23861738.5
(22) Date of filing: 25.08.2023
(51) Int. Cl.: A01M 21/04, F22B 1/22

(54) **SUPERHEATED STEAM DESICCATOR WITH DEPRESSURIZED FLOW FOR AGRICULTURAL, COMMERCIAL AND RESIDENTIAL USE**

(30) Priority: 08.09.2022 BR 202022017922 U
(71) Applicant: Finkler, José, 98787-899 Santa Rosa (BR)
(72) Inventor: Finkler, José, 98787-899 Santa Rosa (BR)
(74) Representative: do Nascimento Gomes, Rui
(86) International application number: PCT/BR2023/050281
(87) International publication number: WO 2024/050614

(57) **Abstract**

This application refers to a superheated steam desiccator with depressurized flow for agricultural, commercial and residential applications, for the application of steam for cleaning surfaces is something relatively well established in the market, however the systems/equipment used have design limitations preventing the full use of the heat that can be obtained through the generation of steam, mainly heated steam.

## Description

The present disclosure refers to a superheated steam desiccator with depressurized flow for agricultural, commercial and residential applications, for the application of steam for cleaning surfaces is something relatively well established in the market, however the systems/equipment used have design limitations preventing the full use of the heat that can be obtained through the generation of steam, mainly heated steam.

### BACKGROUND OF THE INVENTION

Currently, the superheated heat generation process is widely used in thermoelectric plants for electricity generation as well as in industrial environments such as agricultural industries refrigeration plants. The superheated heat generation process consists of heating water to temperatures above which cannot be condensed, unlike saturated steam where steam and water can coexist.

Currently, patent MU8900003-2 U2 describes a superheated steam generator system applied in a system for application in desiccation and cleaning of rural and urban areas, contemplating a steam generation system and its accumulation in a pressure vessel, from the same inventor as this patent application.

The company Cristanini (cristanini.it) has a high-pressure jet washing equipment that uses saturated steam. The system is designed to clean surfaces with the aid of steam. The application is done using a manual lance similar to home jet washing equipment.

Similar equipment is described by patent PI 7705600.

The company MSD (www.msd-ag.de) has equipment for sterilizing soil for planting vegetables and legumes. The equipment consists of a saturated steam generator stored in a pressure vessel, mobile platforms for applying steam to the soil and the entire system embedded on a trailer pulled by a tractor.

Similar equipment is described by patents US6073859A, US546682, US6047900A, PT1768489E.

The company Weedtechnics (www.weedtechnics.com) has equipment designed to eliminate weeds in urban and rural areas. The equipment consists of a saturated steam generator, a manual lance for application, similar to home jet washing equipment and the entire system embedded on a trailer pulled by a tractor or car.

Similar equipment is described by patents CA2161680, US2005/0143259A1, KR20090084234A, CA2515380.

The application of steam to clean surfaces (in its broadest understanding) is something relatively well established in the market, however the systems/equipment used have design limitations preventing the full use of the heat that can be obtained through the generation of steam, especially superheated steam.

In situations where steam is generated in its saturated form, the fluid temperature can reach values of 200°, which is only a temperature reference and is directly related to the system pressure. When the system uses superheated steam, the fluid temperature can increase significantly, consequently improving the efficiency of the heat generated and, however, allowing the system pressure to also tend to increase considerably.

In both situations, the heat generated by steam is used for various purposes, the main ones being the generation of electricity and use in the food industry.

However, steam is a fluid that can be used to eliminate virtually any plant organism by almost instantaneously cooking the organic material.

Saturated steam is currently used to eliminate weeds in situations where the use of pesticides is not permitted, especially in urban areas. Some companies offer this service through equipment that generates and stores high-pressure steam, which means that operators are constantly exposed to failures that could cause the steam storage system, which consists of a pressure vessel, to explode.

Issues involving the safety of people near the equipment are always treated as a top priority, limiting the use of steam in residential areas, streets, and places with the circulation of people. Even the system operators themselves are subject to risks that, if triggered, can be fatal.

### PROBLEMS SOLVED WITH THE INVENTION

The superheated steam generation system proposed in this patent consists of equipment capable of generating superheated steam with no need to store it for later application, and the generated steam is directly applied to the surface of interest. This operation eliminates the need for a pressure vessel and consequently eliminates the risk of explosion of the equipment.

The mixture of gases from the fuel burning and the steam generated means that the final superheated fluid can be applied to dry surfaces without the risk of burning the material. This feature allows the superheated steam to be applied to crops, sidewalks or any location having dry plant matter together with live weeds, without the risk of fire.

### SUMMARY OF THE INVENTION

The superheated steam desiccator object of the present disclosure consists of a superheated steam generation system that operates without a system to accumulate high-pressure steam, that is, without a pressure vessel. All the generating steam is expelled out of the system continuously as the water flow and heat is kept constant to feed the equipment.

In a preferred embodiment, all the steam generated is produced according to demand, ceasing the liquid (for steam generation) and heat supply to the equipment at the moment the steam discharge flow is interrupted. This concept brings advantages to the equipment, which are:
Eliminating the high-pressure storage system, avoiding the risk of explosion and accidents to people close to the equipment;
Simplifying equipment due to the elimination of mechanical and electrical components related to the steam storage system and safety aspects linked to this condition;
A second embodiment consists of a control system that automatically diverts the steam flow the instant its discharge is interrupted, keeping the generator running and directing the superheated steam to a path where it can be safely dissipated into the environment. This configuration avoids the need to restart the steam generator and eliminates system warm-up time.

### BRIEF DESCRIPTION OF THE FIGURES

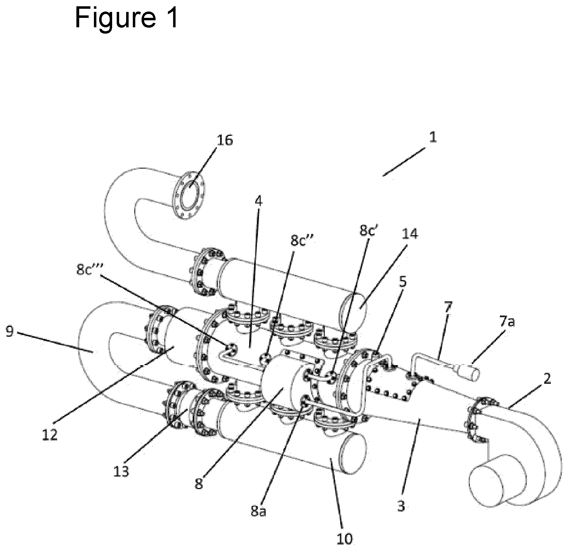

Figure 1 - Perspective view of superheated steam desiccator;
   1 - Superheated steam desiccator;
   2 - Burner;
   3 - Heat conducting duct;
   4 - Overheating cell;
   5 - Temperature sensor;
   7 - Feeding coil;
   7a - Inlet piping for coils;
   8 - Expansion chamber;
   8a - Expansion chamber (8) base;
   8c', 8c'', and 8c''' - Injection ducts for each intermediate duct (11);
   9 - Connecting pipe;
   10 - Splitting chamber;
   12 - Collection chamber;
   13 - Compressor apparatus;
   16 - System outlet;

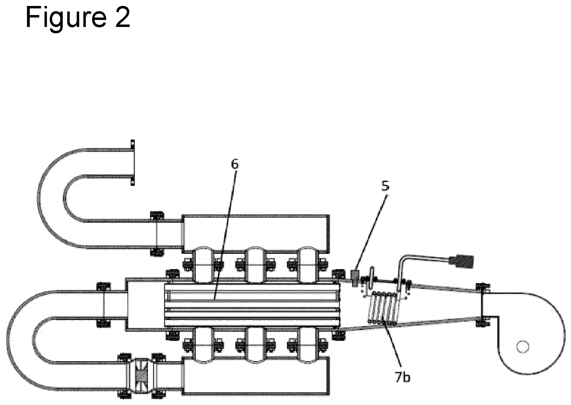

Figure 2 - Side cross-section view of the superheated steam desiccator;
   5 - Temperature sensor;
   6 - Heating ducts;
   7b - Spiral section;

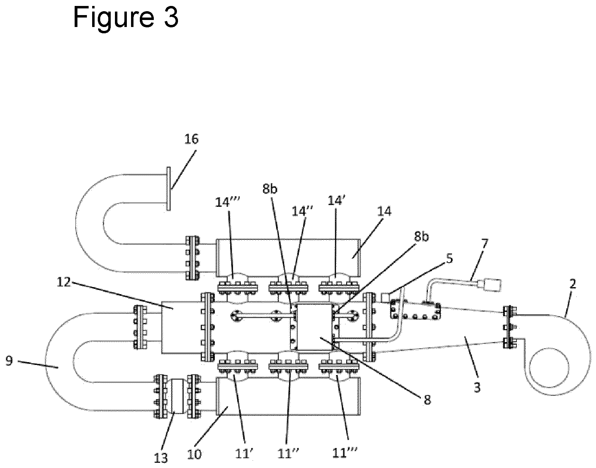

Figure 3 - Lateral view of the superheated stem desiccator;
   2 - Burner;
   3 - Heat conducting duct;
   5 - Temperature sensor;
   7 - Feeding coil;
   8 - Expansion chamber;
   8b - Outlet of the expansion chambers (8);
   9 - Connecting pipe;
   10 - Splitting chamber;
   11', 11", and 11''' - Lower intermediate ducts;
   12 - Collecting chamber;
   13 - Compressor apparatus;
   14 - Collecting chamber;
   14', 14'' e 14''' - Upper intermediate ducts;
   16 - System outlet;

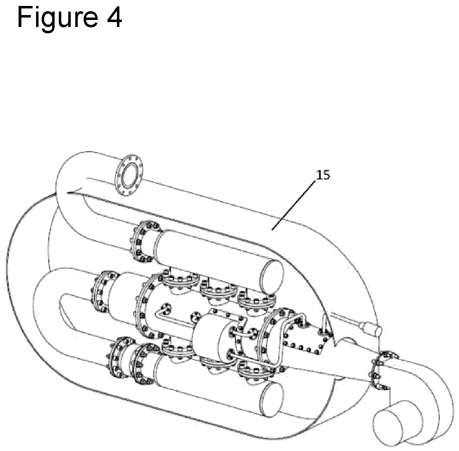

Figure 4 - Lateral view of the superheated stem desiccator;
   15 - Isolation chamber.

### DETAILED DESCRIPTION OF THE INVENTION

The superheated steam desiccator (1) consists of a burner (2) preferably fueled by oil, but may also be fueled by gas, kerosene or any other fuel material capable of generating a constant and minimally necessary heat flow to ensure that the water injected into the system reaches the desired temperatures.

The burner is coupled to a heat conducting duct (3) that conducts the heat flow from the burner to the inlet of the superheating cell (4), and in a preferred embodiment there is a temperature sensor (5) coupled to the heat conducting duct (3) responsible for monitoring the temperature of the system and keeping it operating within the acceptable temperature limits for the materials used in the equipment, as well as keeping it operating efficiently and without wasting fuel material.

The superheating cell (4) is preferably composed of a chamber with a series of small ducts inside it, called superheating ducts (6), arranged in such a way as to allow the heat from the burner to pass through its interior and consequently allow the transfer of this heat, through its walls, to the fluid material composed of gases from the burning of the fuel plus the steam/heated water coming from the feeding coil (7), where the fluid superheating occurs.

In a preferred embodiment, a feeding coil (7) is installed inside the heat conducting duct (3), which has the function of preheating the water that will be injected into the system for the superheated steam generation process.

This coil has an inlet pipe (7a) through which water is fed from an external source, which may or may not be preheated, and having then preferably a spiral section (7b), which may be straight, curved or have any other shape that allows heat to be captured and transferred to the fluid, in this case water, which passes through the coil. This spiral section is preferably installed inside the heat conducting duct (3) and has the function of preheating the water to increase the efficiency of the system.

After preheating, in a preferred embodiment, the water is conducted to an expansion chamber (8) where the heated fluid is released and subsequently expands, and may coexist with superheated steam for later conduction to be injected into the superheating cell (4), and this expansion chamber (8) is preferably connected externally to the superheating cell (4), where the heat generated by the superheating cell (4) is transferred to the expansion chamber (8) causing the preheated water in the coil (7) to be transformed into saturated or even superheated steam, and subsequently injected into the system, preferably next to the superheating cell (4), and may also be injected at any point in the superheating cell (4) in the connecting pipe (9) or even in the splitting chamber (10), and may also be injected at any point in the system as a way of amplifying the efficiency of the system or even adding auxiliary heating and injection systems for heated fluids.

In a preferred embodiment, the entry point of the coil (7) into the expansion chamber (8) is positioned close to the base (8a) of the chamber (8), allowing the fluid injected into the chamber to excite any remaining water volume inside it, just as the chamber outlets (8b) are positioned above the center of its volume, allowing only steam to be directed for injection into the superheating cell (4).

Furthermore, in a preferred embodiment, the outlet of the expansion chamber (8) has an injection duct (8c) for each intermediate duct (11) connected to the superheating cell (4), not being limited to this number, and it being possible to add as many injection ducts (8c) as necessary to obtain maximum system efficiency.

In other versions, the water could pass directly to the injection point (8c) in the system or even have a specific heating system for the expansion chamber (8). The superheating cell (4) is responsible for two stages in the generation of superheated steam: the first of these occurs inside the superheating ducts (6), allowing the heat coming from the burner (2) to pass through these ducts (6) and heat the superheating cell (4). In this stage, there is only the heat flow and combustion gases generated by the burner (2).

The quantity and dimensions of these ducts (6) must be sized according to the desired capacity for the system, with no limitations for this characteristic.

This heat flow passes through the interior of the superheating ducts (6) and is conducted to the collection chamber (12), responsible for collecting and standardizing the flow of gases by conducting them through a connecting pipe (9) that connects the outlet of the superheating ducts (6) to the inlet of the superheating cell (4) itself, where the superheating ducts (6) have the function of raising the temperature of the mixture of heat plus combustion gases plus water/steam that comes into contact with its surfaces to the temperature of superheated steam, this flow being subsequently suitable for use for the proposed purpose, which may be the dissection of weeds or any vegetable plant, sterilization and cleaning of surfaces, not limited to these applications and these being the main applications for the object of the present disclosure.

In a preferred embodiment, there is, along the connecting pipe (9), a compressor apparatus (13), which may be a turbine, unidirectional valve or any device capable of maintaining the flow of gases in a single direction, responsible for maintaining the flow of gases always in the direction of the system outlet (16), avoiding counter-flow and preventing the burner from drowning (2).

Before the superheating cell (4) there is a splitting chamber (10) which has, in this preferred embodiment, but is not limited to it, three intermediate ducts (11) for conducting the heat flow plus combustion gases plus water/steam to the superheating cell (4), with the main function of the splitting chamber (10) being to collect the gases from the burner (2), which have already passed through the superheating ducts (6) and split their flow to feed the superheating cell (4) in a more uniform and better distributed manner.

At the outlet of the superheating cell (4) there is a collecting chamber (14) responsible for collecting the mixture of superheated steam plus combustion gases and conducting this fluid in the desired direction for the application of this product.

The collecting chamber (14) also has three intermediate ducts (14'), which is a preferred embodiment, but is not limited to it, and there may be as many intermediate tubes (14') as necessary to extract the best efficiency from the system. Both the lower (11') and upper (14') intermediate ducts to the superheating cell (4) have the function of optimizing the heat transfer from the superheating cell (4), distributing the heat flow plus combustion gases plus water/steam through the superheating cell (4) in the most efficient way possible.

The entire superheated steam generation system (1) is surrounded by an insulation chamber (15) responsible for maintaining the efficiency of the system by limiting heat loss, in addition to protecting people who may circulate around the system, avoiding direct contact with the hot parts of the equipment.

## Claims

1. A superheated steam desiccator with depressurized flow for agricultural, commercial and residential applications **characterized in that** it has a superheated steam generation system with reuse of the heat produced prior to the superheating cell.

2. A superheated steam desiccator with depressurized flow for agricultural, commercial and residential applications **characterized in that** it enables the production of superheated steam prior to the superheating cell.

3. A superheated steam desiccator with depressurized flow for agricultural, commercial and residential applications **characterized in that** the steam is produced by the heat generated substantially by the external surface of the superheating cell.

4. A superheated steam desiccator with depressurized flow for agricultural, commercial and residential applications characterized int that the heat generation gases are reinjected into the superheating cell to amplify the production of superheated steam.

5. A superheated steam desiccator with depressurized flow for agricultural, commercial and residential applications **characterized in that** the presence of a pressurizing component positioned substantially before the superheating cell.

6. The superheated steam desiccator with depressurized flow for agricultural, commercial and residential applications, according to claim 1, **characterized in that** it has a superheated steam generation system without a pressure vessel system.

7. The superheated steam desiccator with depressurized flow for agricultural, commercial and residential applications, according to claim 2, **characterized in that** the steam is generated substantially during the passage of the fluid through its path to the superheating cell.

8. The superheated steam desiccator with depressurized flow for agricultural, commercial and residential applications, as per claim 2, **characterized in that** it also produces superheated steam in the superheating cell.

9. The superheated steam desiccator with depressurized flow for agricultural, commercial and residential applications, according to claim 8, **characterized in that** the superheating cell has at least two superheated fluid injection channels and at least two superheated steam discharge channels.

10. The superheated steam desiccator with depressurized flow for agricultural, commercial and residential applications, according to claim 7, **characterized in that** the fluid passes through a pipe passing through the interior of the heat conducting duct.

11. The superheated steam desiccator with depressurized flow for agricultural, commercial and residential applications, according to claim 7, **characterized in that** the fluid passes through a pipe with an external passage substantially tangential to the superheating cell.

12. The superheated steam desiccator with depressurized flow for agricultural, commercial and residential applications, according to claim 5, **characterized in that** the pressurizer prevents the return of gases.

13. Superheated steam desiccator with depressurized flow for agricultural, commercial and residential applications according to claim 4, **characterized in that** both the heat production gases and the fluid intended for superheating are confluent in a location substantially prior to contact with the superheating cell.

14. The superheated steam desiccator with depressurized flow for agricultural, commercial and residential applications, according to claim 3, **characterized in that** the superheated fluid generated in the expansion chamber is preferably injected on the superheating cell by at least two injection channels.
